# EUROPÄISCHE PATENTANMELDUNG

(11) **EP 4 275 498 A1**
(43) Veröffentlichungstag der Anmeldung: **15.11.2023**
(21) Anmeldenummer: 23167935.8
(22) Anmeldetag: 14.04.2023
(51) Int. Cl.: A21B 1/24

(54) **ETAGEN-BACKOFEN**

(30) Priorität: 12.05.2022 DE 102022204668; 30.09.2022 DE 102022210387
(71) Anmelder: Werner & Pfleiderer Lebensmitteltechnik GmbH, 91550 Dinkelsbühl (DE)
(72) Erfinder: Dannenhauer, Bernd, 91550 Dinkelsbühl (DE); Blümel, Frank, 91614 Mönchsroth (DE)
(74) Vertreter: Rau, Schneck & Hübner Patentanwälte Rechtsanwälte PartGmbB

(57) **Zusammenfassung**

Ein Etagen-Backofen (1) hat mehrere etagenweise übereinander angeordnete Backräume (2, 3). Eine Umluft-Heizvorrichtung (4) des Backofens (1) hat einen Brenner (5) zur Erzeugung erhitzter Umluft (6) und einen Umluftventilator (7). Letzterer dienet zum Umwälzen der Umluft (6) durch einen Umluft-Kreislauf (8), der abschnittsweise durch Heizregister (9 bis 11) zum Beheizen der Backräume (2, 3) gebildet ist. Ein Abgasrohr (15) verbindet den Umluft-Kreislauf (8) mit einer Umgebung (15a) des Etagen-Backofens (1). Eine über einen Klappen-Stellmotor (17) verstellbare Abgasklappe (16) ist im Abgasrohr (15) angeordnet. Eine Steuer/Regeleinrichtung (18) steht mit dem Klappen-Stellmotor (17) in Signalverbindung (19). Es resultiert ein Etagen-Backofen mit hoher Energieeffizienz. Die Abgasklappe, der Klappen-Stellmotor sowie eine Steuer/Regeleinheit können Teil eines Nachrüstsatzes für einen konventionellen Etagen-Backofen sein.

## Beschreibung

Der Inhalt der deutschen Patentanmeldungen DE 10 2022 204 668.4 und DE 10 2022 210 387.4 wird durch Bezugnahme hierin aufgenommen.

Die Erfindung betrifft einen Etagen-Backofen. Ferner betrifft die Erfindung einen Nachrüstsatz zum Nachrüsten eines Etagen-Backofens.

Ein Etagen-Backofen ist vom Markt her bekannt und beispielsweise auch aus der DE 198 20 061 A1 bekannt. Die DE 198 06 959 A1 offenbart einen Dampfbackofen. Die DE 10 2014 110 376 B4 offenbart einen Backofen und ein Backverfahren mit optimiertem Backraumdruck.

Es ist eine Aufgabe der vorliegenden Erfindung, einen Etagen-Backofen derart weiterzubilden, dass eine hohe Energieeffizienz ermöglicht ist.

Diese Aufgabe ist erfindungsgemäß gelöst durch einen Etagen-Backofen mit den im Anspruch 1 angegebenen Merkmalen.

Erfindungsgemäß wurde erkannt, dass es zur Vermeidung unnötiger Energieverluste beim Etagen-Backofen notwendig ist, einen für den Betrieb notwendigen Unterdruck im Umluft-Kreislauf des Etagen-Backofens im Vergleich zu einem Umgebungsdruck so gering wie möglich einzustellen. Der Unterdruck im Umluft-Kreislauf verhindert, dass Abgase unkontrolliert, also insbesondere nicht über das Abgasrohr, in die Umgebung entweichen. Die Einstellbarkeit des Unterdrucks ist gewährleistet durch die steuer- bzw. regelbare Abgasklappe im Abgasrohr des Etagen-Backofens. Sobald eine Druckdifferenz zwischen dem Umgebungsdruck und dem Umluft-Druck abhängig von Betriebsparametern des Etagen-Backofens zu gering wird, kann diese Druckdifferenz über eine Verstellung der Abgasklappe wieder oberhalb einer vorgegebenen Mindestdifferenz gehalten werden. Über eine Betriebsdauer des Etagen-Backofens kann dann insgesamt ein vergleichsweise hoher Druck im Umluft-Kreislauf, also ein geringer Unterdruck, eingestellt sein, was die Energieeffizienz des Etagen-Backofens steigert. Die Abgasklappe kann ausschließlich gesteuert betrieben werden, wobei es dann nicht erforderlich ist, einen aktuellen Betriebszustand des Etagen-Backofens zu messen. Steuerwerte für den Klappen-Stellmotor können dann in einer in der Steuer/Regeleinrichtung abgelegten Kalibriertabelle abhängig von den Betriebsparametern des Etagen-Backofens gespeichert sein. Diese Betriebsparameter können backprogrammabhängig im Rahmen eines Ofen-Kalibrierprozesses eingemessen werden. Beim tatsächlichen Nutzerbetrieb müssen derart gebildete Parameter dann nicht mehr gemessen werden, sodass eine reine Steuerung vorliegen kann. Die Steuer/Regeleinrichtung kann zusätzlich mit dem Brenner und/oder mit dem Umluftventilator in Signalverbindung stehen. Die Betriebsparameter des Etagen-Backofens lassen sich während eines Kalibrierungsprozesses oder auch während des Nutzbetriebs des Etagen-Backofens gewinnen.

Die Steuerung der Abgasklappe über die Steuer/Regeleinrichtung und den Klappen-Stellmotor kann derart sein, dass ein geringer Unterdruck im Umluft-Kreislauf des Etagen-Backofens vorliegt. Der Unterdruck im Umluft-Kreislauf des Etagen-Backofens kann dabei vom Umgebungsdruck um nicht mehr als 15%, um nicht mehr als 10%, um nicht mehr als 5%, um nicht mehr als 2%, um nicht mehr als 1%, um nicht mehr als 0,1% oder auch um eine noch geringere Relativ-Differenz abweichen. Eine Abweichung zwischen dem eingestellten Unterdruck im Umluft-Kreislauf und dem Umgebungsdruck ist relativ regelmäßig größer als 0,01%.

Ein Klappen-Stellmotor nach Anspruch 2 ist wenig aufwendig. Die Verschiedenen Klappenstellungen können über Anschläge realisiert sein.

Ein Drucksensor nach Anspruch 3 ermöglicht ein geregeltes Nachführen der Abgasklappe abhängig vom gemessenen Umluft-Druck im Umluft-Kreislauf und gegebenenfalls abhängig von weiteren Betriebsparametern des Etagen-Backofens. Dies erhöht eine Genauigkeit der Einstellung des Umluft-Drucks, sodass diese wiederum noch näher an einen Umgebungsdruck herangeführt werden kann.

Eine Anordnung des Drucksensors nach Anspruch 4 hat sich in der Praxis bewährt.

Eine Drucknachführung nach Anspruch 5 ermöglicht eine präzise Vorgabe des Ist-Umluftdrucks. Bei dem Soll-Umluftdruck kann es sich um einen konstanten Umluftdruck handeln. Alternativ ist es möglich, innerhalb eines Backprogramms eine Variation des Soll-Umluftdrucks vorzugeben, um beispielsweise Regel-Überschwinger auszugleichen. Auch backprogrammabhängig können verschiedene Werte für einen Soll-Umluftdruck vorgegeben werden.

Eine Vorgabe des Soll-Umluftdrucks nach Anspruchs 6 ist besonders energieeffizient.

Toleranzwerte nach den Ansprüchen 7 und 8 haben sich als Vorgabewerte für den energieeffizienten Backbetrieb bewährt.

Die Abweichung kann kleiner sein und kann beispielsweise höchstens 5 %, höchstens 2 %, höchstens 1 %, höchstens 0,1 %, höchstens 0,5 %, höchstens 0,1 % oder auch nur höchstens 0,05 % sein.

Bei einem Umgebungsdruck von 1015 hPa kann die Abweichung zwischen dem Umgebungs-Luftdruck und dem darunterliegenden Soll-Umluftdruck höchstens 100 Pa sein, höchstens 50 Pa, höchstens 25 Pa oder auch höchstens 20 Pa. Diese Abweichung ist regelmäßig größer als 5 Pa.

Mithilfe mindestens eines Temperatursensors nach Anspruch 9 ist eine Ist/Soll-Nachführung einer Temperatur abhängig vom gewählten Backprogramm möglich. Die Temperaturmessung kann zum Beispiel in mindestens einem der Backräume erfolgen. Auch mehrere Temperatursensoren in verschiedenen Backräumen und/oder in verschiedenen Backraumzonen ein und desselben Backraums sind möglich. Eine Klappenstellung der Abgasklappe kann, gesteuert über die Steuer/Regeleinrichtung, mit dem Klappen-Stellmotor abhängig von mindestens einem gemessenen Betriebsparameter Druck, Temperatur, Luftfeuchtigkeit, Brennerzustand an/aus oder Ventilatorleistung vorgegeben werden.

Abgasklappen-Anordnungen nach den Ansprüchen 10 oder 11 haben sich in der Praxis bewährt. Grundsätzlich kann der Etagen-Backofen mehrere im Abgasrohr hintereinander angeordnete Abgasklappen aufweisen. Die mit Abstand zur Abgasrohr-Mündung im Abgasrohr angeordnete Abgasklappe kann beispielsweise am Ort einer konventionellen Rauchgasklappe angeordnet sein.

Mindestens eine Entschwadungsleitung nach Anspruch 12 ermöglich die Realisierung eines Entschwadungs-Bypasses. Auch bei im Wesentlichen geschlossener Abgasklappe ist dann eine Entschwadung des jeweiligen Backraums über den der Abgasklappe nachgeordneten Abgasrohr-Abschnitt möglich.

Die Vorteile eines Nachrüstsatzes nach Anspruch 13 entsprechen denen, die vorstehend unter Bezugnahme auf den erfindungsgemäßen Etagen-Backofen bereits erläutert wurden. Mit dem Nachrüstsatz kann ein konventioneller Etagen-Backofen zu einem erfindungsgemäßen Etagen-Backofen aufgerüstet werden.

Ein Nachrüstsatz nach Anspruch 14 ermöglicht einen geregelten Betrieb der Abgasklappe und somit des nachgerüsteten Etagen-Backofens entsprechend dem, was vorstehend im Zusammenhang mit dem Etagen-Backofen mit dem Drucksensor erläutert wurde.

Ein Abgasrohr oder ein Abgasrohr-Abschnitt nach Anspruch 15 als Bestandteil des Nachrüstsatzes ermöglicht eine einfache Installation der nachzurüstenden Abgasklappe.

Der Nachrüstsatz kann auch mehrere Abgasklappen beinhalten, die hintereinander im Abgasrohr oder im Abgasrohr-Abschnitt, der wiederum Bestandteil des Nachrüstsatzes sein kann, angeordnet sind.

Teil des Nachrüstsatzes kann auch mindestens eine Entschwadungsleitung sein, die, wie vorstehend erläutert, einen Bypass der mindestens einen Abgasklappe realisiert.

Mit dem Etagen-Backofen können Teiglinge, beispielsweise Brot oder Brötchen, gebacken werden.

Ein Ausführungsbeispiel wird nachfolgend anhand der Zeichnung näher erläutert. In dieser zeigen:
- Fig. 1: schematisch und teilweise im Schnitt Hauptkomponenten eines Etagen-Backofens mit einer Umluft-Heizvorrichtung und einer in einem Abgasrohr angeordneten, über einen Klappen-Stellmotor verstellbaren Abgasklappe;
- Fig. 2: in einem Diagramm eine zeitliche Entwicklung von Betriebsparametern des Etagen-Backofens, nämlich eines einem Soll-Temperaturwert folgenden Ist-Temperaturwertes einschließlich Zeiträumen einer Aktivierung eines Brenners der Umluft-Heizvorrichtung und eines Unterdruckverlaufes in einem Umluft-Kreislauf der Umluft-Heizvorrichtung, gemessen über einen Drucksensor des Backofens; und
- Fig. 3: in einer zu Fig. 1 ähnlichen Darstellung eine weitere Ausführung eines Etagen-Backofens mit einer weiteren, im Abgasrohr angeordneten, über einen Klapp-Stellmotor verstellbaren Abgasklappe, die grundsätzlich auch anstelle der Abgasklappe der Fig. 1 zum Einsatz kommen kann.

Ein Etagen-Backofen 1 hat mehrere, etagenweise übereinander angeordnete Backräume 2, 3. Ein Etagen-Backofen ist grundsätzlich bekannt aus der DE 198 20 061 A1.

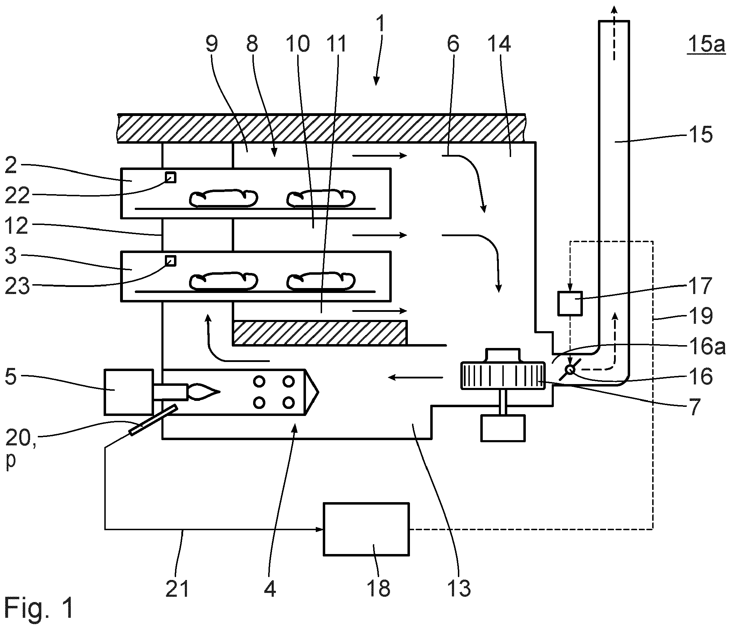

Der Etagen-Backofen 1 hat eine Umluft-Heizvorrichtung 4. Letztere hat einen Brenner 5 zur Erzeugung erhitzter Umluft, deren Strömung in der Figur 1 durch Richtungspfeile 6 veranschaulicht ist. Ein Umluftventilator 7 der Umluft-Heizvorrichtung 4 dient zum Umwälzen der Umluft 6 durch einen Umluft-Kreislauf 8. Letzterer ist abschnittsweise durch Heizregister 9, 10, 11 zum Beheizen der Backräume 2 und 3 gebildet. Ein Vertikalschacht 12 verbindet einen Brennerraum 13 mit den Heizregistern 9 bis 11. Das Heizregister 9 erzeugt eine Oberhitze für den oberen Backraum 2. Das Heizregister 10 erzeugt eine Unterhitze für den oberen Backraum 2 und eine Oberhitze für den unteren Backraum 3. Das Heizregister 11 erzeugt eine Unterhitze für den unteren Backraum 3.

Der Umluftventilator 7 ist als Radialgebläse ausgeführt, kann alternativ aber auch als Axialgebläse oder als Axial/Radialgebläse ausgeführt sein.

Der Umluftventilator 7 wälzt die Umluft 6 vom Brennerraum 13 über den Vertikalschacht 12, die Heizregister 9 bis 11 und einen Rückstromraum 14 im Kreislauf um. Umluftklappen, die in der Figur nicht dargestellt sind, im Umluft-Kreislauf 8 dienen zu einer Verteilung der Umluft 6 auf die Heizregister 9 bis 11. Diese Umluftklappen können motorisch und/oder manuell zwischen verschiedenen Klappenstellungen umstellbar sein, sodass eine Luftströmung durch die Heizregister 9 bis 11 gesteuert zwischen 0 % und 100 % in mindestens zwei Stufen, gegebenenfalls auch kontinuierlich, vorgegeben werden kann.

Ein Abgasrohr 15 verbindet den Umluft-Kreislauf 8 mit einer Umgebung 15a des Etagen-Backofens 1. Im Abgasrohr 15 ist eine Abgasklappe 16 angeordnet, die auch als Saugzugklappe bezeichnet ist. Die Abgasklappe 16 ist im Abgasrohr 15 nahe einer Mündung 16a des Abgasrohrs 15 in den Brennerraum 13 angeordnet. Die Abgasklappe 16 steht mit einem Klappen-Stellmotor 17 in Wirkverbindung, kann über diesen Klappen-Stellmotor 17 also zwischen verschiedenen Klappenstellungen verstellt werden. Über den Klappen-Stellmotor 17 können bei einer Variante des Etagen-Backofens 1 genau zwei verschiedene Klappenstellungen der Abgasklappe 16 im Abgasrohr 15 eingestellt werden. In einer ersten dieser beiden Klappenstellungen liegt ein größerer Durchgangs-Querschnitt des Abgasrohrs 15 im Bereich der Abgasklappe 16 vor als in der zweiten der beiden Klappenstellungen. Alternativ kann die Abgasklappe 16 über den Klappen-Stellmotor 17 auch in mehr als zwei verschiedene Klappenstellungen im Abgasrohr 15 eingestellt werden. Auch eine kontinuierliche Vorgabe der Klappenstellung der Abgasklappe 16 über dem Klappen-Stellmotor 17 ist möglich.

Mit dem Klappen-Stellmotor 17 steht eine Steuer/Regeleinrichtung 18 des Etagen-Backofens 1 in Signalverbindung 19, was in der Figur 1 gestrichelt dargestellt ist. In der Steuer/Regeleinrichtung 18 kann eine Kalibriertabelle für Klappenstellungen der Abgasklappe 16 abhängig von Betriebsparametern des Etagen-Backofens 1 abgelegt sein. Die Steuer/Regeleinrichtung 18 steht zusätzlich mit dem Brenner 5 und mit dem Umluftventilator 7 in Signalverbindung, was in der Figur 1 nicht dargestellt ist.

Der Etagen-Backofen 1 hat weiterhin einen Drucksensor 20 zum Messen eines Umluft-Drucks p im Umluft-Kreislauf 8. Bei der in der Figur 1 dargestellten Ausführung misst der Drucksensor 20 den Umluft-Druck p im Bereich des Brenners 5. Alternativ oder zusätzlich kann der Umluft-Druck p auch an anderer Stelle des Umluft-Kreislaufs 8 mithilfe mindestens eines alternativen oder zusätzlichen Drucksensors gemessen werden. Der Drucksensor 20 steht mit der Steuer/Regeleinrichtung 18 in Signalverbindung 21.

Die Steuer/Regeleinrichtung 18 ist so ausgeführt, dass über die Verstellung des Klappen-Stellmotors 17 ein Ist-Umluftdruck p_{Ist}, der mit dem Drucksensor 20 gemessen ist, einem vorgegebenen und im Speicher der Steuer/Regeleinrichtung 18 abgelegten Soll-Umluftdruck p_{Soll} nachgeführt wird. Der abgespeicherte Soll-Umluftdruck p_{Soll} liegt unterhalb eines Umgebungs-Luftdrucks der Umgebung 15a. Eine Druckdifferenz zwischen dem Umgebungs-Luftdruck und dem Soll-Umluftdruck p_{Soll} liegt im Bereich zwischen 5 Pa und 50 Pa, insbesondere zwischen 5 Pa und 30 Pa, beispielsweise zwischen 10 Pa und 25 Pa, zum Beispiel bei 15 Pa oder bei 20 Pa.

Die Steuer/Regeleinrichtung 18 ist so ausgeführt, dass eine Abweichung des Soll-Umluftdrucks p_{Soll} vom Umgebungs-Luftdruck höchstens 10 % beträgt. Zudem ist die Steuer/Regeleinrichtung 18 so ausgeführt, dass eine Variation des Ist-Umluftdrucks p_{Ist} zum Soll-Umluftdruck p_{Soll} höchstens 5 % beträgt.

Zusätzlich hat der Etagen-Backofen 1 noch Temperatursensoren 22, 23 zum Messen mindestens einer Temperatur im Umluft-Kreislauf 8. Bei der dargestellten Ausführung ist der Temperatursensor 22 im oberen Backraum 2 und der Temperatursensor 23 ist im unteren Backraum 3 angeordnet. Es können auch mehrere Temperatursensoren in verschiedenen Backraumzonen der Backräume 2, 3 angeordnet sein.

Die Steuer/Regeleinrichtung 18 steht mit den Temperatursensoren 22, 23 in in der Figur nicht dargestellter Weise in Signalverbindung.

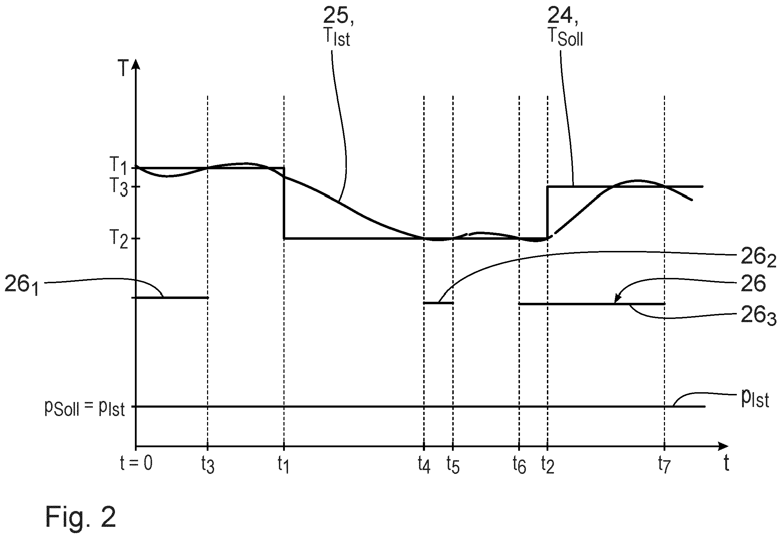

Figur 2 veranschaulicht einen zeitlichen Verlauf eines Backprogramms anhand des zeitlichen Verlaufs verschiedener Betriebsparameter des Etagen-Backofens 1.

Bei 24 ist in der Figur 2 der zeitliche Verlauf einer Soll-Temperatur T_{Soll} im Etagen-Backofen 1 dargestellt. Die Soll-Temperatur T_{Soll} hat initial (t = 0) einen ersten Wert T₁, fällt zum Zeitpunkt t₁ auf einen Wert T₂ und steigt bei einem späteren Zeitpunkt t₂ auf einen dritten Temperaturwert T₃ zwischen den Temperaturen T₁ und T₂. Die Übergänge zwischen den Temperaturen T₁ und T₂ einerseits und zwischen den Temperaturen T₂ und T₃ andererseits sind bei der Soll-Temperatur T_{Soll} stufenförmig.

Bei 25 ist in der Figur 2 der zeitliche Verlauf der Ist-Temperatur T_{Ist} dargestellt, der beispielsweise über mindestens einen der Temperatursensoren 22, 23 gemessen wird.

Zusätzlich sind in der Figur 2 Aktivierungs-Zeiträume 26 des Brenners 5 dargestellt. In einem ersten Aktivierungs-Zeitraum 26₁ zwischen t = 0 und einem Zeitpunkt t₃, der vor dem Zeitpunkt t₁ liegt, sorgt der Aktivierungs-Zeitraum 26₁ dafür, dass die Ist-Temperatur T_{Ist} im Vergleich zur Soll-Temperatur T_{Soll} nicht zu stark abfällt. Zwischen den Zeitpunkten t = 0 und t₁ folgt die Ist-Temperatur T_{Ist} daher in guter Näherung der Soll-Temperatur T_{Soll}.

Nach dem Zeitpunkt t₁ bleibt der Brenner 5 zunächst deaktiviert, bis die Ist-Temperatur T_{Ist} sich der niedrigeren Soll-Temperatur T_{Soll} = T₂ angenähert hat. Anschließend wird der Brenner in einem weiteren Aktivierungs-Zeitraum 26₂ zwischen Zeitpunkten t₄ und t₅, die zwischen den Zeitpunkten t₁ und t₂ liegen, und in einem späteren Aktivierungs-Zeitraum 26₃ wieder aktiviert. Die Aktivierung im Aktivierungs-Zeitraum 26₂ dient der Nachführung der Ist-Temperatur T_{Ist} an die Soll-Temperatur T_{Soll} = T₂. Der Aktivierungs-Zeitraum 26₃ ab dem Zeitpunkt t₆ kurz vor dem Zeitpunkt t₂ sorgt zunächst dafür, dass die Ist-Temperatur T_{Ist} nahe der Soll-Temperatur T₂ bleibt und, ab dem Zeitpunkt t₂, dass die Ist-Temperatur T_{Ist} der wiederum auf den Soll-Wert T₃ erhöhten Soll-Temperatur T_{Soll} nachgeführt wird. Der Aktivierungs-Zeitraum 26₃ dauert bis zum Zeitpunkt t₇ nach dem Zeitpunkt t₂.

Abhängig insbesondere von den Aktivierungs-Zeiträumen 26₁ ändern sich Druckverhältnisse innerhalb des Umluft-Kreislaufs 8, die mittels einer Umstellung der Abgasklappe 16 mittels des Klappen-Stellmotors 17, geregelt über die Steuer/Regeleinrichtung 18, kompensiert werden. Diese Regelung des Ist-Umluftdrucks p_{Ist} auf den Soll-Umluftdruck p_{Soll} ist bei der Backprogramm-Darstellung nach Figur 2 so präzise, dass zwischen diesen Druckwerten p_{Ist} und p_{Soll} der Darstellung nach Figur 2 kein Unterschied vorliegt. Beispielsweise beim Deaktivieren des Brenners 5 zum Zeitpunkt t₃ steigt ein Unterdruck im Umluft-Kreislauf 8 an, der Druck erniedrigt sich also absolut, was durch eine entsprechende Klappen-Umstellung, nämlich durch ein stärkeres Schließen, der Abgasklappe 16 kompensiert wird, sodass sich der Ist-Umluftdruck p_{Ist} nicht ändert. Ohne das Schließen der Abgasklappe 16 beim Deaktivieren des Brenners 5 würde ein Druckabfall um beispielsweise mehr als 100 Pa die Folge sein. Der Druckabfall wird hierdurch im Vergleich zu den mehr als 100 Pa ohne Klappenregelung deutlich reduziert und ist kleiner als 100 Pa und kann beispielsweise im Bereich zwischen 50 und 60 Pa liegen oder noch kleiner sein.

Entsprechend komplementär wird die Abgasklappe 16 mithilfe des Klappen-Stellmotors 17, gesteuert über die Steuer/Regeleinrichtung 18, wieder umgestellt, wenn zum Zeitpunkt t₄ der Brenner 5 wieder aktiviert wird.

Die Abgasklappe 16 wird beim Deaktivieren des Brenners stärker geschlossen und insbesondere vollständig geschlossen. Beim Aktivieren des Brenners würde der absolute Druck im Umluft-Kreislauf 8 ohne Gegensteuerung durch die Abgasklappe 16 wieder abfallen, was durch ein entsprechendes Öffnen der Abgasklappe 16, gesteuert über die Steuer/Regeleinrichtung 18, wieder kompensiert wird. Aufgrund der präzisen Regelung durch die Steuer/Regeleinrichtung 18 bleibt der Ist-Umluftdruck p_{Ist} also sowohl beim Deaktivieren des Brenners 5 (zum Beispiel Zeitpunkt t₃) als auch beim Aktivieren des Brenners 5 (zum Beispiel Zeitpunkt t₄) innerhalb der Darstellungsgenauigkeit der Figur 2 konstant.

Die über die Steuer/Regeleinrichtung 18 und den Klappen-Stellmotor 17 geregelte Klappenstellung der Abgasklappe 16 kann abhängig von mindestens einem gemessenen Betriebsparameter Druck, Temperatur, Luftfeuchtigkeit, Brennerzustand an/aus oder Ventilatorleistung vorgegeben werden, je nach Ausführung des Etagen-Backofens 1.

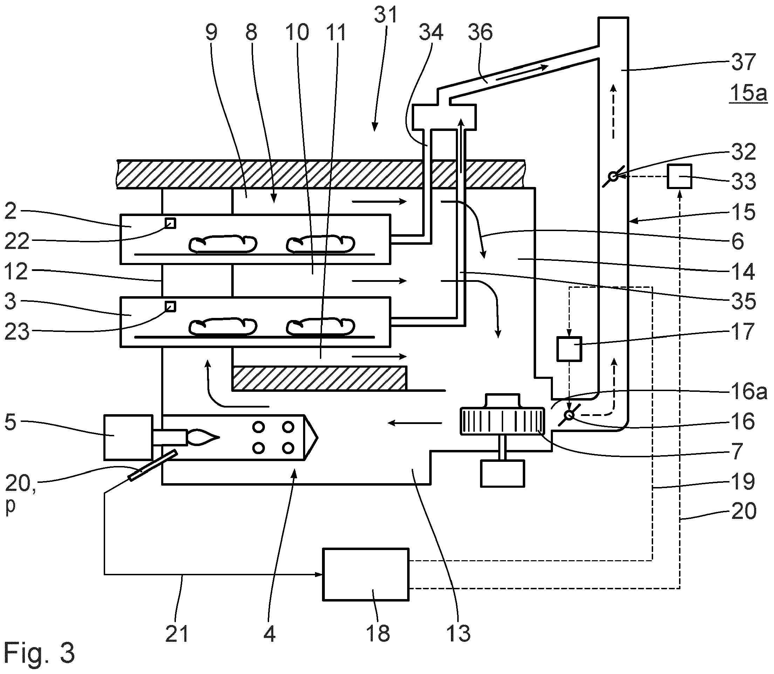

Anhand der Fig. 3 wird nachfolgend eine weitere Ausführung eines Etagen-Backofens 31 beschrieben, die anstelle der Ausführung des Etagen-Backofens nach Fig. 1 zum Einsatz kommen kann. Komponenten und Funktionen, die vorstehend unter Bezugnahme auf die Fig. 1 und 2 bereits erläutert wurden, tragen die gleichen Bezugsziffern und werden nicht nochmals im Einzelnen diskutiert.

Der Etagen-Backofen 31 hat eine Abgasklappe 32, die im Abgasrohr 15 mit Abstand zur Mündung 16a des Abgasrohrs 15 in den Brennerraum 13 angeordnet ist. Die Abgasklappe 32 ist der Abgasklappe 16 in Abgas-Strömungsrichtung nachgeordnet.

Die Abgasklappe 32 kann am Ort einer konventionellen Rauchgasklappe angeordnet sein. Die Abgasklappe 32 kann im Abgasrohr 15 zusätzlich zur Abgasklappe 16 angeordnet sein. Bei einer weiteren, nicht dargestellten Ausführung des Etagen-Backofens 1 liegt die Abgasklappe 32 als einzige Abgasklappe im Abgasrohr 15 vor. Es handelt sich dann also um eine Ausführung gemäß Fig. 3, bei der die Abgasklappe 16 weggelassen ist.

Die Abgasklappe 32 steht mit einem Klappen-Stellmotor 33 in Wirkverbindung, kann über diesen Klappen-Stellmotor 33 also zwischen verschiedenen Klappenstellungen verstellt werden. Es gilt hierbei das, was vorstehend zur Abgasklappe 16 und zum Klappen-Stellmotor 17 erläutert wurde.

Mit dem Klappen-Stellmotor 33 steht die Steuer/Regeleinrichtung 18 des Etagen-Backofens 1 in Signalverbindung 20, was in der Fig. 3 gestrichelt dargestellt ist. In der Steuer/Regeleinrichtung 18 kann wiederum eine Kalibriertabelle für Klappenstellungen der Abgasklappe 32 abhängig von Betriebsparametern des Etagen-Backofens abgelegt sein, so wie dies vorstehend im Zusammenhang mit der Abgasklappe 16 und dem Etagen-Backofen 1 bereits erläutert wurde.

Über die Verstellung des Klappen-Stellmotors 32 führt die Steuer/Regeleinrichtung 18 den Ist-Umluftdruck pᵢₛₜ, der mit dem Drucksensor 20 gemessen ist, dem vorgegebenen und im Speicher der Steuer/Regeleinrichtung 18 abgelegten Soll-Umluftdruck pₛₒₗₗ nach, wie vorstehend im Zusammenhang mit der Ausführung des Etagen-Backofens nach Fig. 1 bereits erläutert.

Auch mit dem Etagen-Backofen 31 kann ein Backprogramm abgearbeitet werden, wie dies vorstehend im Zusammenhang mit der Fig. 2 bereits erläutert wurde.

Aus den Backräumen 2, 3 mündet jeweils eine Entschwadungsleitung 34, 35 in eine Entschwadungs-Sammelleitung 36 des Etagen-Backofens 1 ein. Die Entschwadungs-Sammelleitung 36 mündet in einen Abschnitt 37 des Abgasrohrs 15 ein, der in Abgas-Strömungsrichtung der Abgasklappe 32 nachgeordnet ist.

Die Entschwadungsleitungen 34, 35 dienen zusammen mit der Entschwadungs-Sammelleitung 36 als Bypass zur Entschwadung der Backräume 2, 3 auch bei im Wesentlichen geschlossenen Abgasklappen 32 beziehungsweise 16. Ein entsprechender Bypass kann auch beim Etagen-Backofen 1 nach Fig. 1 zum Einsatz kommen.

Über die Leitungen 34 bis 36 stehen die Backräume 2, 3 mit dem Abgasrohr-Abschnitt 37 in Fluidverbindung.

Der Abgasrohr-Abschnitt 37 oder auch das gesamte Abgasrohr 15, die Abgasklappe 16 beziehungsweise 32, der Klappen-Stellmotor 17 beziehungsweise 33 und die Steuer/Regeleinrichtung 18 können Bestandteile eines Nachrüstsatzes zum Nachrüsten eines jeweiligen Etagen-Backofens sein. Zum Nachrüstsatz gehört weiterhin der Drucksensor 20. Der nachzurüstende Etagen-Backofen weist dann die etagenweise übereinander angeordneten Backräume sowie eine Umluft-Heizvorrichtung entsprechend dem auf, was vorstehend im Zusammenhang insbesondere mit dem Etagen-Backofen 1 bereits erläutert wurde. Mit einem derartigen Nachrüstsatz ist eine Verbesserung einer Energieeffizienz auch bei konventionellen EtagenBacköfen möglich.

Der Nachrüstsatz kann eine Steuer/Regeleinheit aufweisen, die entweder autark zur Steuerung/Regelung der Abgasklappe über den Klappen-Stellmotor dient, oder die mit der Steuer/Regeleinrichtung 18 des Etagen-Backofens 1 beziehungsweise 31 verbunden werden kann.

Die Funktion der Steuer/Regeleinheit des Nachrüstsatzes entspricht derjenigen, die vorstehend im Zusammenhang mit der Steuer/Regeleinrichtung 18 des Etagen-Backofens 1 beziehungsweise 31 bereits erläutert wurde.

## Patentansprüche

1. Etagen-Backofen (1; 31)
- mit mehreren etagenweise übereinander angeordneten Backräumen (2, 3),
- mit einer Umluft-Heizvorrichtung (4), aufweisend
-- einen Brenner (5) zur Erzeugung erhitzter Umluft (6) und
-- einen Umluftventilator (7) zum Umwälzen der Umluft (6) durch einen Umluft-Kreislauf (8), der abschnittsweise durch Heizregister (9 bis 11) zum Beheizen der Backräume (2, 3) gebildet ist,
- mit einem Abgasrohr (15), welches den Umluft-Kreislauf (8) mit einer Umgebung (15a) des Etagen-Backofens (1; 31) verbindet,
- mit einer über einen Klappen-Stellmotor (17) verstellbaren Abgasklappe (16), die im Abgasrohr (15) angeordnet ist,
- mit einer Steuer/Regeleinrichtung (18), die mit dem Klappen-Stellmotor (17) in Signalverbindung (19) steht.

2. Etagen-Backofen nach Anspruch 1, **dadurch gekennzeichnet, dass** mit dem Klappen-Stellmotor (17) genau zwei verschiedene Klappenstellungen der Abgasklappe (16) im Abgasrohr einstellbar sind, wobei in einer ersten der Klappenstellungen ein größerer Durchgangs-Querschnitt des Abgasrohrs (15) im Bereich der Abgasklappe (16) vorliegt als in einer zweiten der Klappenstellungen.

3. Etagen-Backofen nach Anspruch 1 oder 2, **gekennzeichnet durch** einen Drucksensor (20) zum Messen eines Umluft-Drucks (p) im Umluft-Kreislauf (8), wobei die Steuer/Regeleinrichtung (18) mit dem Drucksensor (20) in Signalverbindung (21) steht.

4. Etagen-Backofen nach Anspruch 3, **dadurch gekennzeichnet, dass** der Drucksensor (20) im Bereich des Brenners (5) im Umluft-Kreislauf (8) angeordnet ist.

5. Etagen-Backofen nach Anspruch 3 oder 4, **dadurch gekennzeichnet, dass** die Steuer/Regeleinrichtung (18) so ausgeführt ist, dass über die Verstellung des Klappen-Stellmotors (17) ein Ist-Umluftdruck (p_{Ist}), der mit dem Drucksensor (20) gemessen ist, einem vorgegebenen und in einem Speicher der Steuer/Regeleinrichtung (18) abgelegten Soll-Umluftdruck (p_{Soll}) nachgeführt wird.

6. Etagen-Backofen nach Anspruch 5, **dadurch gekennzeichnet, dass** der abgespeicherte Soll-Umluftdruck (p_{Soll}) geringfügig unterhalb eines Umgebungs-Luftdrucks liegt.

7. Etagen-Backofen nach Anspruch 5 oder 6, **dadurch gekennzeichnet, dass** die Steuer/Regeleinrichtung (18) so ausgeführt ist, dass eine Abweichung des Soll-Umluftdrucks (p_{Soll}) vom Umgebungs-Luftdruck höchstens 10 % beträgt.

8. Etagen-Backofen nach einem der Ansprüche 5 bis 7, **dadurch gekennzeichnet, dass** die Steuer/Regeleinrichtung (18) so ausgeführt ist, dass eine Variation des Ist-Umluftdrucks (p_{Ist}) relativ zum Soll-Umluftdruck (p_{Soll}) höchstens 5 % beträgt.

9. Etagen-Backofen nach einem der Ansprüche 1 bis 8, **gekennzeichnet durch** einen Temperatursensor (22, 23) zum Messen einer Temperatur (T_{Ist}) im Etagen-Backofen (1), wobei die Steuer/Regeleinrichtung (18) mit dem Temperatursensor (22, 23) in Signalverbindung steht.

10. Etagen-Backofen nach einem der Ansprüche 1 bis 9, **dadurch gekennzeichnet, dass** die Abgasklappe (16) im Abgasrohr (15) nahe einer Mündung (16a) des Abgasrohrs (15) in einen Brennerraum (13) des Etagen-Backofens (1) angeordnet ist.

11. Etagen-Backofen nach einem der Ansprüche 1 bis 10, **dadurch gekennzeichnet, dass** die oder eine weitere Abgasklappe (32) im Abgasrohr (15) mit Abstand zu einer Mündung (16a) des Abgasrohrs (15) in einen Brennerraum (13) des Etagen-Backofens (1; 31) angeordnet ist.

12. Etagen-Backofen nach einem der Ansprüche 1 bis 11, **dadurch gekennzeichnet, dass** die Backräume (2, 3) über mindestens eine Entschwadungsleitung (34 bis 36) mit einem Abschnitt (37) des Abgasrohrs (15) in Fluidverbindung stehen, der in Abgas-Strömungsrichtung der Abgasklappe (16; 32; 16, 32) nachgeordnet ist.

13. Nachrüstsatz zum Nachrüsten eines Etagen-Backofens (1; 31), wobei der Etagen-Backofen (1; 31) aufweist:
- mehrere etagenweise übereinander angeordnete Backräume (2, 3),
- eine Umluft-Heizvorrichtung (4) mit einem Brenner (5) zur Erzeugung erhitzter Umluft (6) und mit einem Umluftventilator (7) zum Umwälzen der Umluft (6) durch einen Umluft-Kreislauf (8), der abschnittsweise durch Heizregister (9 bis 11) zum Beheizen der Backräume (2, 3) gebildet ist,
- ein Abgasrohr (15), welches den Umluft-Kreislauf (8) mit einer Umgebung (15a) des Etagen-Backofens (1) verbindet,
wobei der Nachrüstsatz aufweist:
- mindestens eine Abgasklappe (16; 32), die in einer Betriebsanordnung im Abgasrohr (15) angeordnet ist,
- einen Klappen-Stellmotor (17; 33) zur Umstellung der Abgasklappe (16; 32),
- eine Steuer/Regeleinheit, die in einer Betriebsanordnung mit dem Klappen-Stellmotor (17; 33) in Signalverbindung steht.

14. Nachrüstsatz nach Anspruch 13, **gekennzeichnet durch** einen Drucksensor (20) zum Messen eines Umluft-Drucks (p) im Umluft-Kreislauf (8) des Etagen-Backofens (1; 31), wobei die Steuer/Regeleinheit in einer Betriebsanordnung mit dem Drucksensor (20) in Signalverbindung (21) steht.

15. Nachrüstsatz nach Anspruch 13 oder 14, **gekennzeichnet durch** ein Abgasrohr (15) oder einen Abgasrohr-Abschnitt (37) zum Verbinden des Umluft-Kreislaufs (8) des Etagen-Backofens (1; 31) mit einer Umgebung (15a) des Etagen-Backofens (1; 31).
